# EUROPÄISCHE PATENTSCHRIFT

(11) **EP 3 740 978 B1**
(45) Veröffentlichungstag und Bekanntmachung des Hinweises auf die Patenterteilung: **13.03.2024**
(21) Anmeldenummer: 19702807.9
(22) Anmeldetag: 04.01.2019
(51) Int. Cl.: H01M 50/213, H01M 50/383

(54) **BATTERIESTROMVERSORGUNG FÜR EIN IN EINEM EXPLOSIONSGEFÄHRDETEN BEREICH EINGESETZTES FLURFÖRDERFAHRZEUG**
BATTERY POWER SUPPLY FOR AN INDUSTRIAL TRUCK WHICH IS USED IN A REGION IN WHICH THERE IS A RISK OF EXPLOSION
ALIMENTATION ÉLECTRIQUE DE BATTERIES POUR UN CHARIOT DE MANUTENTION MIS EN OEUVRE DANS UNE ZONE EXPOSÉE AUX EXPLOSIONS

(30) Priorität: 17.01.2018 DE 102018100912
(43) Veröffentlichungstag der Anmeldung: 25.11.2020
(73) Patentinhaber: Stöcklin Logistik AG, 4242 Laufen (CH)
(72) Erfinder: BACKHAUS, Jörg, 4147 Aesch (CH)
(74) Vertreter: Söllner, Udo
(86) Internationale Anmeldenummer: PCT/EP2019/050136
(87) Internationale Veröffentlichungsnummer: WO 2019/141524

(56) Entgegenhaltungen:
- EP-A1- 1 258 931
- EP-A2- 2 945 215
- EP-B1- 0 989 618
- DE-U1- 9 312 089
- DE-U1- 20 203 258

## Beschreibung

Die vorliegende Erfindung betrifft eine Batteriestromversorgung für ein in einem explosionsgefährdeten Bereich eingesetztes Flurförderfahrzeug, mit einem, einen Gehäusekörper und einen Deckel aufweisenden Gehäuse, wobei der Gehäusekörper einen Aufnahmeraum zur Aufnahme eines Batterietrogs besitzt, der einen Innenraum mit einer darin angeordneten Traktionsbatterie aufweist, und der Deckel mit Sicherungsmitteln lösbar am Gehäusekörper festlegbar ist und der Batterietrog einen Batterietrogdeckel und einen Boden mit sich vom Boden weg erstreckenden Wänden besitzt, nach dem Oberbegriff des Anspruchs 1.

Elektromotorisch betriebene Flurförderfahrzeuge werden häufig auch in explosionsgefährdeten Bereichen eingesetzt, so beispielsweise in der chemischen oder pharmazeutischen Industrie und solche Flurförderfahrzeuge dürfen ausschließlich mit Stromversorgungsquellen betrieben werden, die für den Einsatz gemäß geltender Zündschutzartenbestimmungen zugelassen sind, beispielsweise der ATEX Richtlinie, und hier insbesondere nach den Gerätekategorien 2G beziehungsweise 2D der ATEX Richtlinie 2014/34/EU zertifiziert sind.

Solche Flurförderfahrzeuge müssen daher mit elektrischen Energieversorgungsquellen betrieben werden, die einerseits ausreichend Leistung zur Verfügung stellen und andererseits in Gehäusen gelagert werden, die nach den vorgenannten Bestimmungen zugelassen sind. Als elektrische Energieversorgungsquellen werden bislang hauptsächlich Bleisäurebatterien verwendet, die in einem entsprechenden Gehäuse angeordnet werden.

Ein wesentlicher Nachteil solcher Batteriestromversorgungen auf der Basis von Bleisäurebatterien besteht darin, dass diese für einen Mehrschichtbetrieb mit nur einer einzigen Batteriestromversorgung für eine Tagesschicht des Flurförderfahrzeugs nicht geeignet sind, da sie zu wenig Kapazität besitzen und es daher erforderlich ist, mehrere solcher Batteriestromversorgungen pro Flurförderfahrzeug bereitzuhalten, die während einer Tagesschicht ausgetauscht werden müssen und danach auch nachgeladen werden müssen.

Für den Ladebetrieb solcher Batteriestromversorgungen auf der Basis von Bleisäurebatterien werden vom explosionsgefährdeten Betriebsbereich getrennte Räumlichkeiten benötigt, die aufgrund der beim Laden entstehenden Säuredämpfe und der Gefahr der Bildung von Knallgas an eine Frischluftversorgung angeschlossen werden müssen und mit einer Absauganlage versehen sein müssen, was einerseits den Handlingsaufwand deutlich erhöht und andererseits auch zu einer Steigerung der Betriebskosten der so ausgestatteten Flurförderfahrzeuge beiträgt.

Werden solche Batteriestromversorgungen auf Bleisäurebasis eingesetzt, ist es üblicherweise erforderlich, für eine Tagesschicht pro Flurförderfahrzeug drei bis vier Batteriestromversorgungen bereitzuhalten, woraus sich sofort der oben erwähnte erhebliche Aufwand abzeichnet.

Es ist daher wünschenswert, diesen Aufwand durch den Einsatz anderer elektrischer Energieversorgungsquellen zu verringern.

Anhand der DE 10 2004 008 569 A1 ist eine Batteriestromversorgung für den untertägigen Bergbau bekannt geworden, die ein druckfestes Batteriegehäuse mit darin angeordneten Lithium-Akkuzellen besitzt und dessen charakterisierendes Merkmal darin besteht, dass im Batteriegehäuse eine eigensichere Schaltung zur Überstrombegrenzung und/oder Überspannungsbegrenzung vorgesehen ist. Das hieraus bekannte Batteriegehäuse weist einen Batterietrog und ein damit gekoppeltes Zusatzgehäuse auf, in dem die eigensichere Schaltung angeordnet ist, wobei sich im druckfesten Batteriegehäuse Lithium Akkuzellen angeordnet befinden, die aus der Reihe der Lithium-Ionen-Akkuzellen, Lithium-Polymer-Akkuzellen oder Lithium-Akkuzellen mit einem flüssigen Elektrolyten ausgewählt werden.

Die Wandstärke der Umgebungswände des Batteriegehäuses und des Deckels sowie die Verschraubung zwischen den genannten Bauteilen sind dabei so ausgeführt, dass das Batteriegehäuse druck- und gasdicht verschlossen bleibt, wenn im Innenraum des Batteriegehäuses eine Explosion mit einem bestimmten, maximalen Explosionsdruck auftritt, der sich nach dem bei Lithium-Akkuzellen zu erwartenden maximalen Berstdruck richtet.

Anhand der EP 1 258 931 A1 ist eine Batterie mit einer Explosionsschutzvorrichtung bekannt geworden. Die DE 202 03 258 beschreibt eine Batterie mit einem doppelwandigen Deckel als Explosionsschutz. Die DE 93 12 089 zeigt eine Batterie mit als Explosionsschutz dienenden Öffnungen unterhalb des Gehäusedeckels, die in einem Zwischenblech ausgebildet sind. Die EP 0 989 618 B1 offenbart ein Batteriegehäuse mit im Gehäusedeckel angeordneten Lüftungsschlitzen.

Anhand der EP 2 945 215 B1 ist eine Traktionsbatterie bekannt geworden, die für Flurförderfahrzeuge vorgesehen ist und von Batteriezellen Gebrauch macht, die auf der Basis der Lithium-Polymer-Technologie, Lithium-Kobaltdioxid-Technologie, Lithium-Mangan-Technologie, Lithium-Titanat-Technologie oder der Lithium-Eisenphosphat-Technologie basieren. Zudem ist diese bekannte Traktionsbatterie mit einem Batteriemanagementsystem zum Datenaustausch mit dem Flurförderfahrzeug und/oder einem Ladegerät versehen. Diese bekannte Traktionsbatterie weist aber keinerlei Eigenschaften auf, die einen Hinweis auf ihre Verwendung im explosionsgefährdeten Bereich zulassen würden.

Ausgehend hiervon liegt der vorliegenden Erfindung die Aufgabe zugrunde, eine Batteriestromversorgung für im explosionsgefährdeten Bereich eingesetzte Flurförderfahrzeuge zu schaffen, welche einerseits für den Einsatz in Gas und Staub aufweisenden Zonen zulässig ist und andererseits den vorstehend beschriebenen Handlingsaufwand verringert und zudem so ausgebildet ist, dass im Gefahrenfall im Gehäuse der Batteriestromversorgung unerwartet hohe Explosionsdrücke nicht zu einem Bersten des Gehäuses führen. Auch soll ein Flurförderfahrzeug mit einer solchen Batteriestromversorgung bereit gestellt werden.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben. Das nach der Erfindung geschaffene Flurförderfahrzeug weist die im Anspruch 14 angegebenen Merkmale auf.

Die Erfindung schafft eine Batteriestromversorgung für ein in einem explosionsgefährdeten Bereich eingesetztes Flurförderfahrzeug, mit einem, einen Gehäusekörper und einen Deckel aufweisenden Gehäuse, wobei der Gehäusekörper einen Aufnahmeraum zur Aufnahme eines Batterietrogs besitzt, der einen Innenraum mit einer darin angeordneten Traktionsbatterie aufweist, und der Deckel mit Sicherungsmitteln lösbar am Gehäusekörper festlegbar ist und der Batterietrog einen Batterietrogdeckel und einen Boden mit sich vom Boden weg erstreckenden Wänden besitzt, wobei mindestens eine Wand in einem dem Boden benachbarten Bereich eine die Wand bis zum Innenraum durchsetzende Ausnehmung aufweist.

Mit der erfindungsgemäßen Batteriestromversorgung wird es erreicht, dass bei einer im Batterietrog auftretenden Explosion der darin eingesetzten Traktionsbatterie der Explosionsdruck über die zünddurchschlagsicher ausgebildete mindestens eine Ausnehmung in einem dem Boden benachbarten Bereich an mindestens einer Wand des Batterietrogs soweit verringert wird, dass ein Bersten des Batterietrogs und/oder ein unkontrolliertes Abheben oder sich Lösen des Deckels vom Batterietrog vermieden wird.

Der Explosionsdruck kann auf diese Weise durch eine Druckentspannung aus dem Innenraum oder Aufnahmeraum des Batterietrogs in die Umgebung des Batterietrogs ohne dem Entweichen von etwaigen Flammen aufgrund der Explosion innerhalb des Batterietrogs nach außerhalb des Batterietrogs verringert werden, sodass nicht mehr die Gefahr besteht, dass der Batterietrog unkontrolliert birst und/oder sich der Deckel vom Batterietrog in unkontrollierter Weise teilweise oder vollständig separiert.

Durch die Anordnung der mindestens einen Ausnehmung an einer Wand des Batterietrogs in einem dem Boden benachbarten Bereich wird erreicht, dass eine sich durch Überlagerung einer Explosionswelle im Inneren des Batterietrogs zu einer Überlagerungswelle und damit zu einer Explosionswelle mit höherem Druck als dem Druck der primären Explosionswelle ausbildende Druckspitze auf einen Druck unterhalb des Berstdrucks des Batterietrogs verringert werden kann und auch, dass die auf den Deckel des Batterietrogs vom Innenraum des Batterietrogs aus wirkende Kraftbeaufschlagung nicht zu einem unkontrollierten Abheben oder Lösen des Deckels vom Batterietrog führt. Die Konfiguration führt zudem dazu, dass sich durch die Entspannung des höheren Drucks auf ein Niveau unterhalb der Berstdrucks ein solcher Berstdruck nicht explosionsartig unkontrolliert nach außerhalb des Batterietrogs entspannt, was dazu führen könnte, dass auch das den Batterietrog umgebende Gehäuse der Batteriestromversorgung Gefahr laufen würde zu bersten, so dass ein Explosionsschutz gegen das Bersten des Gehäuses der Batteriestromversorgung nicht mehr gegeben wäre. Durch die kontrollierte Entspannung des höheren Drucks innerhalb des Gehäuses der Batteriestromversorgung wird die Gefahr des Berstens des Gehäuses der Batteriestromversorgung beseitigt.

Auch wird durch diese kontrollierte Druckentspannung innerhalb des Gehäuses der Batteriestromversorgung dafür Sorge getragen, dass der Deckel des Gehäuses der Batteriestromversorgung in vorbestimmter Weise auf dem Gehäusekörper des Gehäuses verbleibt und nicht die Situation eintritt, dass sich zwischen dem Deckel des Gehäuses und dem Gehäusekörper ein Spaltraum einstellt, der ein Nachdringen von Sauerstoff aus der Umgebung in den Innenraum oder Aufnahmeraum des Gehäuses ermöglichen würde. Ein solches Nachdringen von Sauerstoff könnte sich bei einem explosionsartigen Ausbreiten des Berstdrucks innerhalb des Aufnahmeraums durch eine Spaltbildung zwischen Deckel und Gehäuse der Batteriestromversorgung einstellen, was durch die erfindungsgemäße Konfiguration verhindert wird.

Es ist nach einer Weiterbildung der Erfindung vorgesehen, dass der Boden des Batterietrogs in einer Draufsichtansicht eine rechteckförmige Konfiguration mit Längsseiten und Querseiten aufweist und die Längsseiten eine Längserstreckung aufweisen, die größer ist als die Längserstreckung der Querseiten und sich die Wände zur Ausbildung des Innenraums im Winkel zum Boden von diesem weg erstrecken und die an den Querseiten angeordneten Wände eine im Bereich der Mitte der Längserstreckung der jeweiligen Wand angeordnete durchsetzende Ausnehmung und die an den Längsseiten angeordneten Wände jeweils zwei durchsetzende Ausnehmungen aufweisen, die an einander gegenüberliegenden Endbereichen der Längsseiten der jeweiligen Wand angeordnet sind.

Es hat sich im Rahmen der Weiterbildung der erfindungsgemäßen Batteriestromversorgung nämlich gezeigt, dass sich bei einer als Worst Case Szenario anzunehmenden Explosion im Innenraum des Batterietrogs eine Überlagerungswelle oder Superpositionswelle ausgehend von der initialen Explosionswelle ausbildet, die durch zwischen dem Boden des Batterietrogs und dem Deckel des Batterietrogs hin- und her laufende Explosionswellen ausgebildet wird, und die Überlagerungswelle zu einer massiven Drucküberhöhung relativ zum Druck der initialen Explosionswelle führt, welcher beim Auftreffen auf den Deckel des Batterietrogs zu einem unbeabsichtigten Abheben des Deckels vom Batterietrog und damit zu einem unkontrollierten Entweichen des Überlagerungsdrucks aus dem Batterietrog führen könnte.

Durch die Ausbildung der mindestens einen Ausnehmung in einer Wand des Batterietrogs benachbart zum Boden des Batterietrogs kann der durch die Überlagerungswelle ausgebildete überhöhte Druck oder Überlagerungsdruck aus dem Innenraum des Batterietrogs in ungefährlicher Weise nach außerhalb des Innenraums oder Aufnahmeraums des Batterietrogs entspannt werden, sodass die Gefahr des Berstens des Batterietrogs und/oder des Abhebens des Deckels vom Batterietrog minimiert oder beseitigt werden kann. Es hat sich insbesondere gezeigt, dass durch die Ausbildung einer jeweiligen Ausnehmung an jeder Wand an den beiden Querseiten des Batterietrogs und durch die Ausbildung jeweils zweier Ausnehmungen an jeder Wand an den beiden Längsseiten des Batterietrogs der überhöhte Innendruck im Innenraum des Batterietrogs soweit in ungefährlicher Weise nach außerhalb des Batterietrogs entspannt werden kann, sodass die Gefahr eines unkontrollierten sich Lösens des Deckels des Batterietrogs und/oder der Ausbildung eines unbeabsichtigten Spaltraums zwischen dem Deckel des Batterietrogs und den umlaufenden Wänden des Batterietrogs vermieden werden kann.

Der sich aus dem Batterietrog nach außen entspannende Druck verbleibt im Innenraum des Gehäuses, also im Innenraum zwischen dem Gehäusekörper und Deckel des Gehäuses der Batteriestromversorgung, so dass über das ohne Spalträume in die explosionsgefährdete Umgebung ausgebildete druckfest gekapselte Gehäuse der Batteriestromversorgung keine Explosionsgase und auch keine durch die Explosion hervorgerufenen Flammen nach außen gelangen können.

Es hat sich auch gezeigt, dass durch diese Konfiguration die Gefahr beseitigt wird, dass sich zwischen dem Gehäusekörper und dem Deckel des Gehäusekörpers ein Spaltraum öffnet, der ein Nachströmen von Sauerstoff aus der Umgebung des Gehäuses in den Innenraum des Gehäuses und in den Innenraum des Batterietrogs fördern würde, was bei dem Verbleiben des Deckels auf dem Batterietrog trotz einer Explosion im Innenraum des Batterietrogs vermieden werden kann und es dadurch zu einem sofortigen Ersticken einer sich durch die Explosion ausbildenden Flammenfront kommt und auf diese Weise das Entweichen einer Flammenfront aus dem Innenraum des Batterietrogs und dem Innenraum des Gehäuses nach außerhalb des Gehäuses vermieden werden kann.

Es ist nach einer Weiterbildung der Erfindung auch vorgesehen, dass die Ausnehmungen als die jeweilige Wand durchsetzende rechteckförmige Wanddurchbrüche ausgebildet sind. Dies erleichtert beispielsweise die Fertigung der Wände des Batterietrogs, da die Wanddurchbrüche beispielsweise mittels eines Wasserstrahlschneidvorgangs ausgebildet werden können, da die Wände des Batterietrogs aus einem metallischen Werkstoff, insbesondere einer Stahllegierung gefertigt werden können und auf diese Weise die Ausnehmungen auch bei Wänden mit größerer Wandstärke kostengünstig hergestellt werden können.

Es ist nach einer Weiterbildung der Erfindung auch vorgesehen, dass die Ausnehmungen am bodenseitigen Endbereich des Innenraums des Batterietrogs ausgebildet sind und eine Gesamtfläche aufweisen, welche einen im Rahmen einer Baumusterprüfung des Gehäuses durch eine im Gehäuse ausgelöste Testexplosion entstehenden Testexplosionsinnendruck auf einen im Batterietrog herrschenden Zulassungsinnendruck verringert, der kleiner ist als ein den Batterietrog und/oder das verschlossene Gehäuse öffnender Explosionsinnendruck.

Im Rahmen der Baumusterprüfung des Gehäuses der erfindungsgemäßen Batteriestromversorgung wurde der Batterietrog mit einem Testgas gefüllt und eine kontrollierte Explosion im Innenraum des Batterietrogs mittels einer elektrischen Zündung herbeigeführt und der sich ergebende Explosionsinnendruck im Innenraum des Batterietrogs an mehreren Stellen entlang der Höhenrichtung des Batterietrogs verteilt gemessen und dabei hat es sich gezeigt, dass sich im Innenraum des Batterietrogs eine geschichtete Druckverteilung einstellt, die dadurch zustande kommt, dass die Explosionswelle mehrfach zwischen dem Boden und dem Deckel des Batterietrogs hin- und her wandert und es auf diese Weise durch die Reflexionen am Boden und dem Deckel des Batterietrogs zur Ausbildung einer Überlagerungswelle kommt, die ein wesentlich höheres Druckniveau besitzt als das Druckniveau der initialen Explosionswelle.

Durch die Anordnung der mindestens einen Ausnehmung und insbesondere der Ausnehmungen an den Querwänden und Längswänden des Batterietrogs an den vorstehend spezifizierten Stellen kann der Überlagerungsdruck im Innenraum des Batterietrogs nach außerhalb des Batterietrogs entspannt werden, ohne dass es zu der Gefahr einer eine Spaltfläche des Gehäuses der Batteriestromversorgung öffnenden unkontrollierten Verformung oder einer Zerstörung des Batterietrogs kommt und die Überlagerungswelle damit in unkontrollierter Weise den Innenraum des Batterietrogs und den Innenraum oder Aufnahmeraum des Gehäuses der erfindungsgemäßen Batteriestromversorgung verlassen könnte.

Es ist nach einer Weiterbildung der Erfindung auch vorgesehen, dass die Ausnehmungen am bodenseitigen Endbereich des Innenraums des Batterietrogs oberhalb des Bodens in einem Bereich angeordnet sind, an dem eine Überlagerungswelle auftritt, die durch eine im Gehäuse ausgelöste Explosion hervorgerufen ist, die auch durch eine Explosion von Batteriezellen der Traktionsbatterie hervorgerufen werden könnte. Diese Konfiguration führt dazu, dass der durch die Überlagerungswelle im Bereich des Bodens des Batterietrogs auftretende maximale Druck aus dem Innenraum des Batterietrogs entspannt werden kann, ohne dass über die zünddurchschlagsicheren Ausnehmungen eine etwaige Flammenfront den Innenraum des Batterietrogs verlassen könnte.

Es hat sich nämlich gezeigt, dass die Flammenfront, die aufgrund der Explosion im Innenraum des Batterietrogs entsteht, aufgrund der Drucküberhöhung im Innenraum des Batterietrogs im Bereich des Bodens und der dadurch herbeigeführten Sauerstoffverteilung mit einer Anreicherung des Sauerstoffs im Bereich des Deckels im aufrecht stehenden Batterietrog nach oben wandert, also von den am Boden des Batterietrogs ausgebildeten Ausnehmungen weg gerichtet und es somit nicht zu einem nach außen Dringen der Flammenfront aus dem Batterietroggehäuse kommt.

Aufgrund der nachstehend noch näher erläuterten Konfiguration des Batterietrogs erlischt dabei die Flammenfront und wird so im Inneren des Batterietrogs gehalten, ohne nach außen zu dringen.

Es ist nach einer Weiterbildung der Erfindung vorgesehen, dass zwischen einer dem Gehäusekörper zugewandten Deckelfläche und einer dem Deckel zugewandten Oberfläche des Gehäusekörpers eine fein bearbeitete Spaltfläche mit vorbestimmter Spaltflächenbreite und einem Mittenrauwert kleiner oder kleinergleich 6.3 µm ausgebildet ist. Diese Konfiguration führt zu dem bereits angesprochenen Erlöschen der Flammenfront, da über diese fein bearbeitete Spaltfläche mit vorbestimmter Spaltflächenbreite und einem Mittenrauwert kleiner oder kleinergleich 6.3 µm ein Nachströmen von Sauerstoff aus der Umgebung in den Innenraum des Gehäuses und/oder des Batterietrogs vermieden wird und somit die Flammenfront im Innenraum erlischt.

Es ist nach einer Weiterbildung der Erfindung auch vorgesehen, dass der Deckel am Gehäusekörper des Gehäuses mittels einer Mehrzahl von Schraubverbindungen lösbar festgelegt ist und die Schraubverbindungen entlang einer Außenumfangslinie des Deckels verlaufend vorgesehen sind und in einem vorbestimmten Abstand zueinander angeordnet sind. Bei dem vorbestimmten Abstand der Schraubverbindungen handelt es sich insbesondere um einen Abstand im Bereich von 30 bis 80 mm, insbesondere 50 bis 65 mm zwischen den Schraubverbindungen und dadurch wird eine Schließkraft im Bereich der Spaltfläche erreicht, die ein Nachströmen von Sauerstoff in den Innenraum verhindert, wodurch die Flammenfront erlischt.

Es ist nach einer Weiterbildung der Erfindung auch vorgesehen, dass zwischen dem Aufnahmeraum und einer Unterseite des Batterietrogdeckels ein am Batterietrog lösbar festlegbarer Zwischendeckel vorgesehen ist, der einen Aufnahmeraum zwischen einer Oberseite des Zwischendeckels und der Unterseite des Batterietrogdeckels ausbildet und zur Aufnahme einer elektronischen Schaltung ausgebildet ist.

Mit dieser Konfiguration wird erreicht, dass im Batterietrog ein von den Batteriezellen der Traktionsbatterie getrennter Aufnahmeraum ausgebildet wird, der zur Aufnahme einer elektronischen Schaltung oder Platine ausgebildet ist, die beispielsweise zur Kommunikation beziehungsweise zum Datenaustausch zwischen den Zustand der Batteriezellen überwachender Sensoren und einer Steuerung oder Steuereinrichtung des Flurförderfahrzeugs und/oder einem externen Ladegerät zum Aufladen der Batteriezellen dient.

Es ist nach einer Weiterbildung der Erfindung auch vorgesehen, dass die Batteriestromversorgung und insbesondere der Batterietrog mit Kabelverschraubungen zur Bereitstellung einer elektrischen Ladeverbindung zum Laden der Traktionsbatterie und einer elektrischen Leistungsverbindung zur Bereitstellung elektrischer Energie für das Flurförderfahrzeug versehen ist.

Bei den Kabelverschraubungen kann es sich um baumustergeprüfte Kabelverschraubungen handeln, die im Rahmen einer Prüfung der erfindungsgemäßen Batteriestromversorgung zugelassen werden und beibehalten werden müssen. In ähnlicher Weise kann durch solche Kabelverschraubungen auch eine elektrische Ladeverbindung zum Laden der Traktionsbatterie und eine elektrische Leistungsverbindung zur Bereitstellung elektrischer Energie für das Flurförderfahrzeug am Batterietrog vorgesehen sein.

Es ist nach einer Weiterbildung der Erfindung auch vorgesehen, dass die Batteriestromversorgung einen mit einem Schaltschütz schaltbaren Laststromkreis für den Betrieb des Flurförderfahrzeugs und einen mit einem Schaltschütz schaltbaren Ladestromkreis für das Laden der Traktionsbatterie aufweist. Hierbei ist eine Konfiguration möglich, die den Laststromkreis für den Betrieb des Flurförderfahrzeugs, also das Fahren des Flurförderfahrzeugs, das Heben oder Senken von Lastbeförderungsmitteln des Flurförderfahrzeugs mittels eines Schaltschützes spannungsfrei schaltet, sobald mittels eines Schaltschützes der Ladestromkreis zur Einspeisung eines Ladestroms in die Batteriezellen freigeschaltet wird. Auf diese Weise ist ein gleichzeitiger Betrieb des Flurförderfahrzeugs und Laden der Batteriezellen verhindert.

Es ist nach einer Weiterbildung der Erfindung auch vorgesehen, dass die Batteriestromversorgung eine extern schaltbare und mit den Schaltschützen gekoppelte Anschlusseinrichtung besitzt derart, dass die externe Schaltung oder extern ausgelöste Schaltung wechselweise den Laststromkreis spannungsfrei schaltet und den Ladestromkreis durchschaltet derart, dass der Laststromkreis bei geschaltetem Ladestromkreis spannungsfrei ist, wodurch der vorstehend bereits erwähnte gleichzeitige Betrieb des Flurförderfahrzeugs und Laden der Batteriezellen der Batteriestromversorgung vermieden wird.

Es ist nach einer Weiterbildung der Erfindung auch vorgesehen, dass die Batteriestromversorgung eine Schnittstelleneinrichtung in der Form insbesondere einer CAN Bus Schnittstelleneinrichtung zum Austausch von Daten und/oder Signalen zwischen der mit der Traktionsbatterie funktional gekoppelten elektronischen Schaltung und einer externen Ladeeinrichtung für das Laden der Traktionsbatterie besitzt. Diese Konfiguration ermöglicht eine Master-Slave-Konfiguration zwischen der Traktionsbatterie und dem externen Ladegerät, sodass über die elektronische Schaltungseinrichtung beispielsweise Zustandsdaten der Batteriezellen an das externe Ladegerät übertragen werden und so ein Ladeausgleichsverfahren oder Charge Balancing Verfahren zum Laden und/oder Betrieb der Batteriezellen der Traktionsbatterie möglich ist.

Es ist nach einer Weiterbildung der Erfindung auch vorgesehen, dass die Traktionsbatterie von einer Mehrzahl von Lithiumeisenphosphatzellen gebildet ist, die weitgehend parallel zum Boden des Batterietrogs angeordnet sind und zwischen den Zellen Leerräume zum Durchtritt von gasförmigem Fluid aus dem Innenraum des Batterietrogs zu der Ausnehmung vorgesehen sind. Diese Konfiguration ermöglicht es, dass durch die parallele Anordnung der insbesondere zylinderförmig ausgebildeten Lithiumeisenphosphatzellen zwischen den Gehäusekörpern der Batteriezellen jeweils ein Leerraum oder Freiraum besteht, der zum Durchtritt der Überlagerungswelle in Richtung zu der Ausnehmung oder den Ausnehmungen im Bereich des Bodens des Batterietrogs zur Verfügung steht, sodass sich die Überlagerungswelle zur Ausnehmung beziehungsweise den Ausnehmungen bewegen kann und über die Ausnehmung beziehungsweise die Ausnehmungen der vorstehend bereits beschriebene Druckabbau stattfinden kann.

Die Erfindung sieht schließlich auch ein Flurförderfahrzeug vor mit mindestens einer elektrisch betätigten Antriebseinrichtung zum Fahren des Flurförderfahrzeugs und/oder Bewegen einer Last, wobei das Flurförderfahrzeug eine Batteriestromversorgung aufweist, wie sie vorstehend beschrieben worden ist. Das Flurförderfahrzeug ist insbesondere zum Betrieb in einem explosionsgefährdeten Bereich vorgesehen.

Bei dem Flurförderfahrzeug kann es sich beispielsweise um ein selbst fahrendes Staplerfahrzeug handeln, welches zum Fahren des Staplerfahrzeugs und zum Heben oder Senken der Last mit einer Hubeinrichtung des Staplerfahrzeugs ausgebildet ist und für das Fahren des Fahrzeugs oder das Manipulieren der Last elektrische Energie mittels der vorstehend beschriebenen Batteriestromversorgung bereitgestellt wird.

Die Erfindung wird im Folgenden anhand der Zeichnung näher erläutert. Diese zeigt in:
Fig. 1 eine perspektivische Darstellung eines Batterietrogs der Batteriestromversorgung nach einer Ausführungsform gemäß der vorliegenden Erfindung;
Fig. 2 eine Seitenansicht des Batterietrogs nach Fig. 1;
Fig. 3 eine Vorderseitenansicht des Batterietrogs nach Fig. 1;
Fig. 4 eine Draufsichtansicht von oben auf einen zur Anordnung auf einem Gehäusekörper des Gehäuses der Batteriestromversorgung vorgesehenen Deckel;
Fig. 5 eine perspektivische Darstellung des Batterietrogs;
Fig. 5A eine perspektivische Darstellung des Gehäusekörpers des Gehäuses der Batteriestromversorgung;
Fig. 6 eine Querschnittsansicht gemäß der Schnittlinie VI-VI nach Fig. 2 der Zeichnung;
Fig. 7 eine perspektivische Explosionsdarstellung der Batterietrogs mit darin angeordneter Traktionsbatterie;
Fig. 8 eine Seitenansicht eines Flurförderfahrzeugs in der Form eines Gabelstaplers mit daran angeordneter Batteriestromversorgung nach der Erfindung; und
Fig. 9 eine perspektivische Darstellung des im Gehäuse der Batteriestromversorgung angeordneten Batterietrogs ohne den Deckel des Gehäuses.

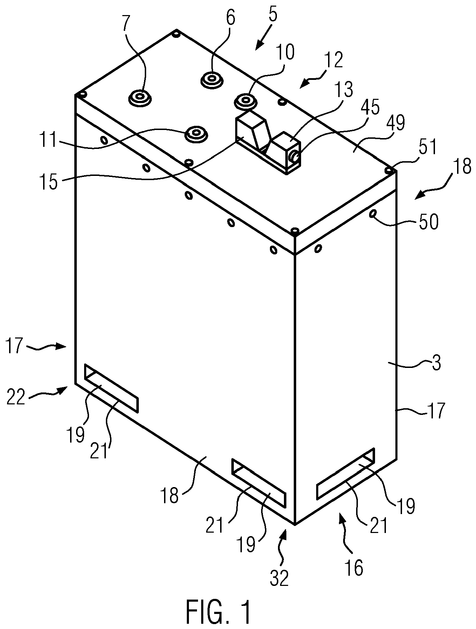

Fig. 1 der Zeichnung zeigt eine perspektivische Darstellung eines Batterietrogs 3 einer Batteriestromversorgung 1 nach einer Ausführungsform gemäß der vorliegenden Erfindung.

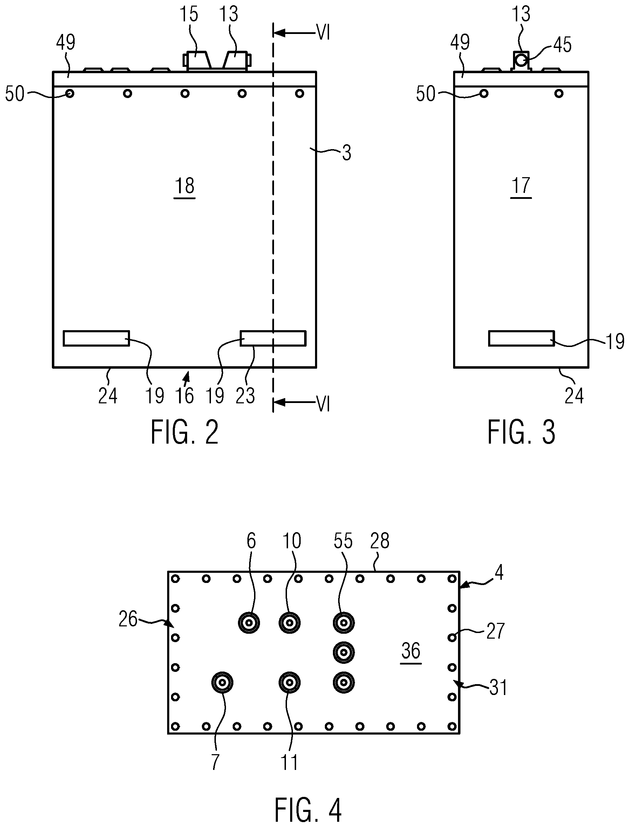

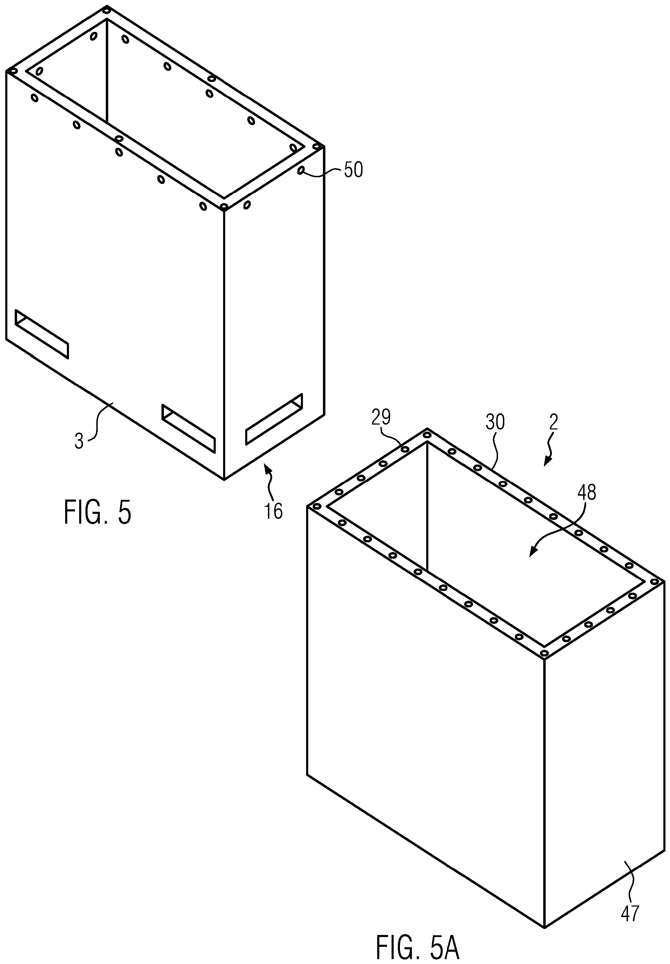

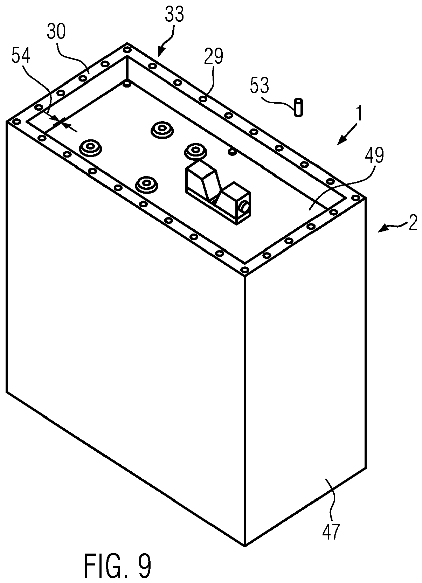

Die ganz allgemein in Fig. 9 der Zeichnung dargestellte Batteriestromversorgung 1 weist ein Gehäuse 2 mit einem Gehäusekörper 47 auf, welches einen näher noch anhand von Fig. 5 der Zeichnung ersichtlichen Batterietrog 3 in einem Aufnahmeraum 48 (Fig. 5A) aufnehmen kann und einen näher noch anhand von Fig. 4. der Zeichnung ersichtlichen Deckel 4 aufnehmen kann.

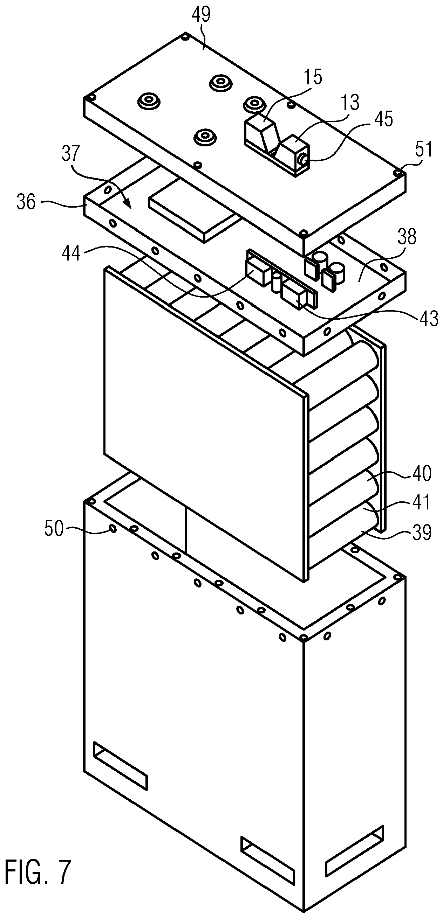

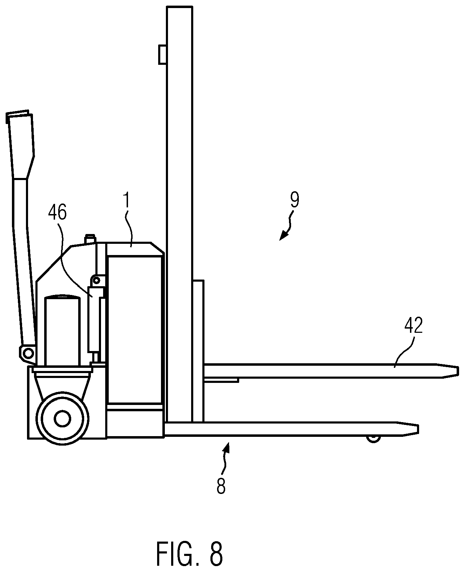

Der Batterietrog 3 besitzt einen Batterietrogdeckel 49 (Fig. 7) mit Kabelverschraubungen 5 in der Form einer Kabelverschraubung 6 zur Bereitstellung eines Minuspols und einer Kabelverschraubung 7 zur Bereitstellung eines Pluspols für die elektrische Leistungsverbindung zur Bereitstellung elektrischer Energie für ein Flurförderfahrzeug 8, bei dem es sich um einen näher anhand von Fig. 8 der Zeichnung ersichtlichen Gabelstapler 9 handeln kann.

In ähnlicher Weise sind am Batterietrogdeckel 49 eine weitere Kabelverschraubung 10 zur Bereitstellung einer Ladebuchse zum Anschluss eines Minuspols und eine Kabelverschraubung 11 zur Bereitstellung einer Ladebuchse zum Anschluss eines Pluspols eines nicht näher dargestellten Ladegeräts für das Laden der Traktionsbatterie 25 vorgesehen.

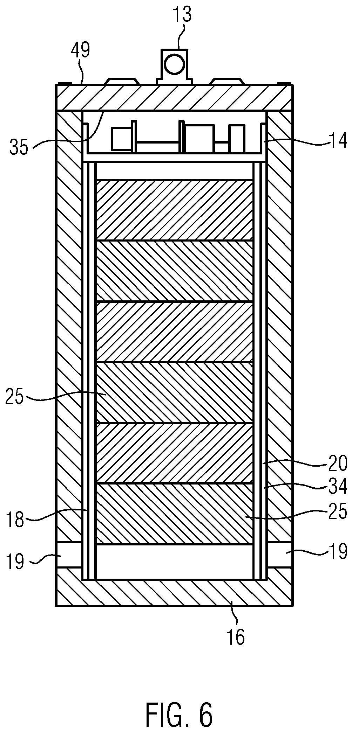

Darüber hinaus ist am Batterietrogdeckel 49 eine lediglich schematisch dargestellte Schnittstelleneinrichtung 12 vorgesehen, die bei der dargestellten Ausführungsform einen siebenpoligen Datenstecker 13 zum Anschluss einer CAN Bus Kommunikationsverbindung zwischen einer elektronischen Schaltungseinrichtung 14, die näher anhand von Fig. 6 der Zeichnung ersichtlich ist, und dem Ladegerät vorgesehen ist und einen siebenpoligen Datenstecker 15 umfasst, welcher zum Anschluss einer CAN Bus Kommunikationsverbindung zwischen der elektronischen Schaltungseinrichtung 14 und dem Flurförderfahrzeug 8 ausgebildet ist.

Der Batterietrog 3 weist einen Boden 16 auf, wie dies beispielsweise anhand von Fig. 1 und 5 der Zeichnung dargestellt ist, von dem sich im rechten Winkel in Richtung zum Batterietrogdeckel 49 gerichtet jeweils zwei Querseitenwände 17 und zwei Längsseitenwände 18 erstrecken, wobei bei der dargestellten Ausführungsform des Batterietrogs 3 die Querseitenwände 17 eine geringere Längserstreckung besitzen als die Längsseitenwände 18.

Wie es anhand von Fig. 1 der Zeichnung ersichtlich ist, besitzt der Batterietrog 3 bei der dargestellten Ausführungsform an der Längsseitenwand 17 in einem dem Boden 16 benachbarten Bereich eine Ausnehmung 19, die als Wanddurchbruch 21 ausgebildet ist und sich von einem Bereich oder Raum außerhalb des Batterietrogs 3 bis in den im Batterietrog 3 ausgebildeten Innenraum 20 (siehe Fig. 6) erstreckt.

In ähnlicher Weise ist an der Querseitenwand 17, welche aufgrund der in Fig. 1 gewählten perspektivischen Darstellung nicht ersichtlich ist, im Bereich des Bodens 16 des Batterietrogs 3 ebenfalls eine Ausnehmung 19 ausgebildet und zwar in der Form eines Wanddurchbruchs 21.

Auch die Ausnehmung 19 der Querseitenwand 17 erstreckt sich von einem Bereich oder Raum außerhalb des Batterietrogs 3 bis in den im Batterietrog 3 ausgebildeten Innenraum 20 hinein.

Fig. 1 der Zeichnung zeigt darüber hinaus, dass die Längsseitenwand 18 zwei Ausnehmungen 19 in der Form von Wanddurchbrüchen 21 besitzt, und zwar wieder im Bereich des Bodens 16 des Batterietrogs 3 und insbesondere an einander gegenüberliegenden Endbereichen 22 der Längsseite 18, wobei die Endbereiche 22 bei der dargestellten Ausführungsform des Batterietrogs 3 an die jeweiligen Querseitenwände 17 angrenzen.

Die aufgrund der in Fig. 1 der Zeichnung gewählten Perspektive nicht ersichtliche Längsseite 18 weist ebenfalls zwei Ausnehmungen 19 in der Form von Wanddurchbrüchen 21 auf, die in zu vorstehend beschriebener Weise entsprechender Weise an den jeweiligen Endbereichen der Längsseite 18 ausgebildet sind und sich ebenfalls von einem Bereich oder Raum außerhalb des Batterietrogs 3 bis in den Innenraum 20 des Batterietrogs 3 erstrecken.

Fig. 2 der Zeichnung zeigt eine Seitenansicht des Batterietrogs 3 und einer Längsseitenwand 18 mit den im Bereich des Bodens 16 des Batterietrogs 3 ausgebildeten zwei Ausnehmungen 19, wie sie vorstehend bereits beschrieben worden sind.

Bei der dargestellten Ausführungsform des Batterietrogs 3 der Batteriestromversorgung 1 besitzen die Ausnehmungen 19 jeweils eine rechteckförmige Konfiguration mit einer Längsseitenerstreckung von 130 mm und einer Höhenerstreckung von 25 mm, wobei die Ausnehmungen 19 jeweils einen unteren Rand 23 aufweisen, der von der Unterseite 24 des Batterietrogs 3, also der Unterseite des Bodens 16 aus betrachtet jeweils 20 mm aus beabstandet ist, sodass sich die vorstehend bereits beschriebene Konfiguration einstellt, dass die Ausnehmungen 19 jeweils in einem dem Boden 16 benachbarten Bereich ausgebildet sind.

Fig. 3 der Zeichnung zeigt eine Vorderseitenansicht des Batterietrogs 3 mit der Querseitenwand 17, die im Bereich des Bodens oder der Unterseite der Querseitenwand 17 eine rechteckförmige Ausnehmung 19 aufweist, die eine Längserstreckung von 130 mm und eine Höhenerstreckung von 25 mm besitzt und ebenfalls einen unteren Rand 23 aufweist, der von der Unterseite 24 des Bodens 16 aus einen Abstand von 20 mm besitzt.

Wie es vorstehend bereits erläutert wurde, besitzt auch die gegenüberliegende Querseitenwand 17 eine Ausnehmung 19 und die gegenüberliegende Längsseitenwand 18 weist zwei Ausnehmungen 19 auf, welche einerseits in der Mitte der Längserstreckung der Querseitenwand 17 und andererseits an den beiden Endbereichen 22 der Längserstreckung der Längsseitenwand 18 angeordnet sind.

Die Konfiguration und die Platzierung der jeweiligen Ausnehmungen 19 in der Form von Wanddurchbrüchen 21 an den Längsseitenwänden 18 und den Querseitenwänden 17 ist so gewählt, dass der Druck aufgrund einer etwaigen Explosion einer im Innenraum 20 des Batterietrogs 3 angeordneten Traktionsbatterie 25 (siehe Fig. 6 der Zeichnung) durch die Ausnehmungen 19 auf ein Restdruckniveau entspannt werden kann, welches so niedrig ist, dass das Gehäuse 2 der Batteriestromversorgung 1 durch die Explosion nicht auf unbeabsichtigte Weise geöffnet wird, also beispielsweise birst, und auch der Deckel 4 am Gehäusekörper 47 verbleibt, also nicht vom Gehäusekörper 47 abgehoben wird oder sich zwischen dem Deckel 4 und dem Gehäusekörper 47 der Batteriestromversorgung 1 ein Spaltraum ausbildet, der ein Eindringen oder Nachströmen von Sauerstoff in den Aufnahmeraum 48 des Gehäuses 2 gestatten würde.

Die Konfiguration und die Platzierung der jeweiligen Ausnehmungen 19 am Batterietrog 3 ist insbesondere so gewählt, dass sich eine Drucküberhöhung im Innenraum 20 des Batterietrogs 3 der Batteriestromversorgung 1, die aufgrund einer Explosion im Innenraum 20 entsteht, und durch eine zwischen dem Boden 16 und dem Batterietrogdeckel 49 hin- und her laufende Überlagerungswelle oder Superpositionswelle entsteht, nicht zum gewaltsamen und unbeabsichtigten Öffnen des Gehäuses 2 führt, da eine durch die Überdruckwelle im Bereich des Bodens 16 des Batterietrogs 3 entstehende Drucküberhöhung oder Druckspitze gezielt durch die so konfigurierten und platzierten Ausnehmungen 19 auf ein Restdruckniveau verringert werden kann, welches das Gehäuse 2 der Batteriestromversorgung 1 in gewünschter Weise intakt bleiben lässt, also keine Öffnungen oder Spalten am Gehäuse 2 entstehen, die ein Ausbreiten einer Flammenfront aus dem Aufnahmeraum 48 des Gehäuses 2 heraus ermöglichen würden. Ein Austreten einer Flammenfront aus dem Innenraum 20 des Batterietrogs 3 heraus durch die Ausnehmungen 19 hindurch wird dadurch verhindert, dass die Ausnehmungen 19 im Bereich des Bodens 16 des Batterietrogs 3 angeordnet sind, wie dies vorstehend schon erläutert worden ist.

Fig. 4. der Zeichnung zeigt eine Draufsichtansicht von oben auf den Deckel 4 des Gehäuses 2.

Wie es ohne weiteres ersichtlich ist, befinden sich an der Oberseite 26 des Deckels 4 ebenfalls Kabelverschraubungen 6, 7, 10, 11 angeordnet, die zum Herausleiten der Kabel für das Laden der Batterie und die Stromzuführung an das Flurförderfahrzeug 8 vorgesehen sind und drei weitere Kabelverschraubungen 55 angeordnet, bei denen es sich um Kabelverschraubungen Exd handeln kann und über die Anschlußleitungen zur Verbindung mit den Datensteckern 13 und 15 und dem Pilotkontakt 45 am Batterietrogdeckel 49 zum Datenaustausch und zur Kommunikation angeordnet werden können. Eine Vielzahl von Bohrungen oder Öffnungen 27 sind am Deckel 4 vorgesehen, die entlang einer Außenumfangslinie 28 des Deckels 4 verlaufend angeordnet sind und zueinander in vorbestimmten Abstand angeordnet sind, wobei dieser Abstand bei der dargestellten Ausführungsform der Batteriestromversorgung 1 beziehungsweise des Deckels 4 einen Wert von 55 bis 65 mm aufweist. Bei allen in dieser Schrift genannten Kabelverschraubungen kann es sich um solche Kabelverschraubungen handeln, die zum Einsatz in explosionsgefährdeten Bereichen vorgesehen sind.

In die Bohrungen 27 können eine Mehrzahl von in Fig. 9 der Zeichnung dargestellte Schraubbolzen 53 eingesetzt werden, welche in Gewindebohrungen 29 an einer oberen Flanschfläche 30 des Gehäusekörpers 47 eingreifen können, wie dies in Fig. 9 der Zeichnung dargestellt ist.

Die Flanschfläche 30 des Gehäusekörpers 47 und eine zugehörige Flanschfläche oder Deckelfläche 31 an der Unterseite des Deckels 4 sind dabei fein bearbeitet ausgeführt, sodass sich zwischen der Flanschfläche 30 und der Deckelfläche 31 eine feinbearbeitete Spaltfläche 33 nach Fig. 9 der Zeichnung einstellt, die einen Mittenrauwert von 6.3 µm und eine Spaltflächenbreite von 30 mm besitzt. Die Schraubbolzen 53 werden mit einer hohen Vorspannkraft mit den Gewindebohrungen 29 verschraubt und die feinbearbeitete Spaltfläche 33 sorgt dafür, dass sich im Falle einer Explosion im Innenraum 20 des Batterietrogs 3 eine Flammenfront nicht durch die Spaltfläche 33 hindurch in Richtung nach außerhalb des Batteriegehäuses 2 ausbreiten kann und ein Nachströmen oder Einströmen von Sauerstoff über die fein bearbeitete Spaltfläche 33 in den Aufnahmeraum 48 und Innenraum 20 vermieden wird und aufgrund des Sauerstoffverbrauchs der sich im Innenraum 20 in Richtung zum Deckel 4 hin ausbreitenden Flammenfront die Flammenfront selbsttätig erlischt.

Fig. 6 der Zeichnung zeigt eine Schnittdarstellung des Batterietrogs 3 gemäß dem Schnitt VI-VI nach Fig. 2 der Zeichnung.

Der Batterietrog 3 weist einen Boden 16 mit daran angeordneten Längsseiten 18 auf, in denen die Ausnehmungen 19 in der Form der Wanddurchbrüche 21 ausgebildet sind, die sich von außerhalb des Batterietrogs 3 bis in den Innenraum 20 erstrecken.

Im Innenraum 20 befindet sich die in Fig. 6 der Zeichnung lediglich schematisch dargestellte Traktionsbatterie 25 angeordnet, welche nachfolgend näher noch anhand von Fig. 7 der Zeichnung erläutert wird.

Die Anordnung der Traktionsbatterie 25 im Innenraum 20 ist dabei so gewählt, dass zwischen den Außenflächen der Traktionsbatterie 25 und den Ausnehmungen 19 ein Freiraum oder Leerraum 34 verbleibt, der ein Ausbreiten einer durch eine Explosion im Innenraum 20 ausgelösten Druckwelle in Richtung zu den Ausnehmungen 19 hin ermöglicht. Auf diese Weise wird es erreicht, dass sich auch eine Überlagerungswelle in Richtung zu den Ausnehmungen 19 hin ausbreiten kann und eine durch die Überlagerungswelle ausgelöste Druckamplitude durch einen teilweisen Druckabbau zwischen dem Innenraum 20 und der Umgebung des Batterietrogs 3 im Aufnahmeraum 48 des Gehäuses 2 abgebaut werden kann, sodass im Innenraum 20 und Aufnahmeraum 48 ein Restdruckniveau verbleibt, welches niedriger ist als ein vorbestimmter Berstdruck des Batteriegehäuses 2 und somit ein Bersten des Batteriegehäuses 2 beziehungsweise ein bereichsweises Aufplatzen des Batteriegehäuses 2 und ein unkontrolliertes sich Lösen des Deckels 4 des Batteriegehäuses 2 vermieden ist.

Wie es anhand von Fig. 6 und Fig. 7 der Zeichnung darüber hinaus ersichtlich ist, ist zwischen dem Innenraum 20 und der Unterseite 35 des Batterietrogdeckels 49 ein am Batterietrogdeckels 49 lösbar festlegbarer und anhand von Fig. 7 der Zeichnung näher ersichtlicher Zwischendeckel 36 angeordnet, der einen Aufnahmeraum 37 zwischen der Oberseite 38 des Zwischendeckels und der Unterseite 35 des Batterietrogdeckels 49 ausbildet. Der Zwischendeckel 36 kann mittels schematisch dargestellter Schraubverbindungen 50 an den Längsseiten und Querseiten des Batterietrogs 3 festgelegt werden und der Batterietrogdeckel 49 kann mittels schematisch dargestellter Schraubverbindungen 51 am Batterietrog 3 festgelegt werden.

In dem Aufnahmeraum 37 kann die elektronische Schaltungseinrichtung oder Platine 14 angeordnet werden, die vorstehend bereits erläutert wurde und eine Schaltung zur Überwachung des Zustands der Traktionsbatterie 25 beziehungsweise der Batteriezellen der Traktionsbatterie 25 aufweist und gleichzeitig über einen an dem Datenstecker 13 angeordneten Pilotkontakt 45 so geschaltet werden kann, dass beispielsweise mittels eines in die Schaltung integrierten Schaltschützes 43 für den Laststromkreis und eines in die Schaltung integrierten Schaltschützes 44 für den Ladestromkreis oder mittels der Schaltung schaltbarer Schaltschütze 43, 44 der Laststromkreis für den Betrieb des Flurförderfahrzeugs 8 spannungsfrei geschaltet werden kann und der Ladestromkreis für das Nachladen der Traktionsbatterie durchgeschaltet werden kann derart, dass der Laststromkreis bei geschaltetem Ladestromkreis spannungsfrei ist und ein Betrieb des Flurförderfahrzeugs 8 und gleichzeitiges Laden der Traktionsbatterie 25 vermieden wird.

Fig. 7 der Zeichnung zeigt eine perspektivische Explosionsdarstellung des Batterietrogs 3 mit darin angeordneter Traktionsbatterie 25. Die Traktionsbatterie 25 weist eine Vielzahl von Lithiumeisenphosphatzellen LiFePO₄ 39 auf, welche jeweils als zylinderförmige Körper 40 ausgebildet sind und zwischen den Zellen 39 jeweils Leerräume oder Freiräume 41 ausgebildet sind, die dem Durchtritt der vorstehend bereits mehrfach erläuterten Druckwelle dienen, die sich durch die Leerräume 41 hindurch in Richtung zu den Ausnehmungen 19 ausbreiten kann und auf diese Weise der bereits angesprochene teilweise Druckabbau aus dem Innenraum 20 in Richtung zum Bereich außerhalb des Batterietrogs 3 stattfinden kann.

Fig. 5A der Zeichnung zeigt eine perspektivische Darstellung des Gehäusekörpers 47 des Gehäuses 2 der Batteriestromversorgung 1 mit der an der Oberseite des Gehäusekörpers 47 ausgebildeten fein bearbeiteten Flanschfläche 30 und der Vielzahl der Gewindebohrungen 29, mit denen der in Fig. 4 der Zeichnung dargestellte Deckel 4 mittels eines Schraubeingriffs der in Fig. 9 der Zeichnung dargestellten Schraubbolzen 53 in den Gewindebohrungen 29 lösbar festgelegt werden kann.

Fig. 9 der Zeichnung zeigt eine perspektivische Darstellung der Batteriestromversorgung 1 mit dem im Aufnahmeraum 48 angeordneten Batterietrog 3, wobei bei der gewählten Darstellung der Deckel 4 des Gehäuses 2 der Batteriestromversorgung 1 weggelassen wurde. Durch die Anordnung des Deckels 4 an der Flanschfläche 30 bildet sich die vorstehend bereits erwähnte Spaltfläche 33 aus, die ein Nachströmen von Sauerstoff in den Innenraum 20 des Batterietrogs 3 verhindert, so dass eine durch eine Explosion im Innenraum 20 entstehende Flammenfront durch den Sauerstoffverbrauch selbsttätig verlischt und nicht nach außerhalb des Gehäuses 2 der Batteriestromversorgung 1 entweichen kann. Die Außenwände des Batterietrogs 3 bilden zu den Innenwänden des Gehäusekörpers 47 jeweils einen Zwischenraum 54 aus, der als Expansionskammer für den Druckabbau aus dem Innenraum 20 des Batterietrogs 3 dient.

Fig. 8 der Zeichnung zeigt einen mit der erfindungsgemäßen Batteriestromversorgung 1 versehenen Gabelstapler 9, der als Flurförderfahrzeug zum Betrieb in einem explosionsgefährdeten Bereich einer Industrieanlage oder dergleichen vorgesehen ist.

Der Gabelstapler 9 kann mittels der Batteriestromversorgung 1 elektromotorisch verfahren werden und das Lastaufnahmemittel 42 kann mittels eines schematisch dargestellten elektrischen Antriebsmotors 46 des Gabelstaplers 9 elektromotorisch angehoben und abgesenkt werden. Die elektrische Energie zum Betrieb des Gabelstaplers 9 wird dabei mittels der erfindungsgemäßen Batteriestromversorgung 1 bereitgestellt, die sich dadurch auszeichnet, dass die Kapazität der Batteriestromversorgung 1 für eine gesamte Tagesschicht des Flurförderfahrzeugs 8 ausreichend ist und daher während der gesamten Schicht keine Notwendigkeit besteht, die Batteriestromversorgung 1 einem Nachladevorgang der Traktionsbatterie 25 zu unterziehen.

Die Batteriestromversorgung nach der Erfindung ist für eine Anwendung in einem explosionsgefährdeten Bereich vorgesehen und erfüllt die vorstehend erwähnten Zündschutzartenbestimmungen und ist insbesondere für die Gerätekategorie 2G und 2D nach der ATEX Richtlinie 2014/34/EU zugelassen und für den Einsatz in Zonen mit Gas und Staub vorgesehen. Sie erfüllt insbesondere die Bestimmungen der Explosionsgruppe II und deren Untergruppen IIA, IIB und IIB+H₂ und zeichnet sich insbesondere dadurch aus, dass auch eine durch eine etwaige Explosion im Gehäuse der Batteriestromversorgung auftretende Überlagerungswelle nicht zum Bersten des Gehäuses führt, sondern ein mit der Überlagerungswelle einhergehender überhöhter Druck auf ein Restdruckniveau entspannt wird, welches nicht zu einer Zerstörung des Gehäuses führt und insbesondere nicht dazu, dass der Deckel des Batteriegehäuses geöffnet oder weggerissen wird und damit ein Explosionsschutz nicht mehr gegeben wäre.

Es hat sich in Rahmen von zu Testzwecken der erfindungsgemäßen Batteriestromversorgung mit einer explosiven Gasmischung durchgeführten Testexplosionen gezeigt, dass im Innenraum des Gehäuses durch Überlagerung von Druckwellen Druckspitzen von 21,8 bar aufgetreten sind und diese Druckspitzenwerte mittels der erfindungsgemäßen Ausgestaltung der Batteriestromversorgung auf einen Wert von unter 8 bar abgesenkt werden konnten und daher ein Bersten des Gehäuses und ein unbeabsichtigtes sich Lösen des Deckels des Gehäuses vermieden werden konnte, sodass der Explosionsschutz aufgabengemäß beibehalten werden konnte.

Darüber sorgt die erfindungsgemäße Ausgestaltung der Batteriestromversorgung auch dafür, dass Gewichtsplatten oder Masseplatten, die für die Erhöhung der Standfestigkeit mit bekannten Batteriestromversorgungen versehener Flurförderfahrzeuge bislang benötigt wurden, entfallen können.

Der Deckel des Gehäuses der erfindungsgemäßen Batteriestromversorgung zeichnet sich durch baumustergeprüfte Kabelverschraubungen der Gerätekategorie 2G/2D nach der oben genannten ATEX Richtlinie aus, durch die sowohl die Batteriekabel zum Laden der Traktionsbatterie als auch die Batteriekabel zur Energiebereitstellung für das Flurförderfahrzeug geführt werden. Durch die Kabelverschraubungen können auch Kommunikationsleitungen, CAN Bus Leitungen oder Leitungen für die Übertragung von Daten und/oder Signalen zwischen der Traktionsbatterie und/oder einer elektronischen Schaltungseinrichtung der erfindungsgemäßen Batteriestromversorgung und externen Geräte, Schaltungen oder Einrichtungen hindurch durchgeführt werden und auch Leitungen zur Bereitstellung elektrischer Energie für elektrische Antriebsmotoren eines Flurförderfahrzeugs.

Die zum Einsatz mit der erfindungsgemäßen Batteriestromversorgung vorgesehenen Lithiumeisenphosphatzellen sorgen im Vergleich zu bislang eingesetzten Bleisäurebatterien für einen erheblichen Gewinn an bereitgestellter elektrischer Kapazität der Batteriestromversorgung, sodass beispielsweise eine Kapazität von etwa 200 Amperestunden vorgehalten werden kann.

Die Lastkreise der Traktionsbatterie teilen sich auf in einen mit einem Schaltschütz gesteuerten Lastkreis für das Fahren des Flurförderfahrzeugs und Heben beziehungsweise Senken eines Lastaufnahmemittels des Flurförderfahrzeugs und einen Lastkreis für das Laden der Traktionsbatterie, der über ein Schaltschütz abgesichert ist. Beide Lastkreise sind technisch voneinander getrennt, sodass verhindert wird, dass das Flurförderfahrzeug während eines Ladevorgangs der Traktionsbatterie verfahren werden kann. Ebenso wird dafür gesorgt, dass die an der Batteriestromversorgung vorgesehenen Anschlusseinrichtungen für das Laden der Traktionsbatterie während des Betriebs der Traktionsbatterie zum Abgeben elektrischer Energie für den Betrieb des Flurförderfahrzeugs spannungsfrei sind.

Über einen an einer Anschlusseinrichtung der Batteriestromversorgung vorgesehenen Pilotkontakt des Ladegeräts wird dafür Vorsorge getroffen, dass über die Betätigung eines Ladeschützes oder Schaltschützes ein Ladestromkreis für die Traktionsbatterie geschlossen wird, ein Schaltschütz den Laststromkreis zum Abgeben elektrischer Energie an das Flurförderfahrzeug spannungsfrei geschaltet wird und somit die Ladung der Traktionsbatterie möglich ist, ein gleichzeitiges Entladen der Traktionsbatterie aber über den Laststromkreis nicht mehr möglich ist.

Durch das Schließen des Pilotkontakts wird ein Datenaustausch über die vorstehend erwähnte CAN Bus Kommunikationsschnittstelle zwischen der elektronischen Schaltungseinrichtung der Batteriestromversorgung und einem externen Ladegerät initiiert, sodass ein Ladezyklus entsprechend dem Ladezustand der zur Bildung der Traktionsbatterie vorgesehenen Lithiumeisenphosphatzellen unter Einsatz eines Charge-Balancing-Verfahrens durchgeführt werden kann.

Die zwischen dem Deckel und dem Gehäuse der Batteriestromversorgung ausgebildete fein bearbeitete Spaltfläche sorgt dafür, dass ein Nachströmen oder Einströmen von Sauerstoff in den Innenraum oder Aufnahmeraum des Gehäuses im Falle der Ausbildung einer Flammenfront nach einer Explosion innerhalb des Batterietrogs verhindert wird und somit die Flammenfront selbsttätig erlischt.

Hinsichtlich vorstehend im einzelnen nicht näher erläuterter Merkmale der Erfindung wird in übrigen ausdrücklich auf die Patentansprüche und die Zeichnung verwiesen.

### Bezugszeichenliste

- 1.: Batteriestromversorgung
- 2.: Gehäuse
- 3.: Batterietrog
- 4.: Deckel
- 5.: Kabelverschraubung
- 6.: Kabelverschraubung
- 7.: Kabelverschraubung
- 8.: Flurförderfahrzeug
- 9.: Gabelstapler
- 10.: Kabelverschraubung
- 11.: Kabelverschraubung
- 12.: Schnittstelleneinrichtung
- 13.: Datenstecker
- 14.: Schaltungseinrichtung/Platine
- 15.: Datenstecker
- 16.: Boden
- 17.: Querseitenwand
- 18.: Längsseitenwand
- 19.: Ausnehmung
- 20.: Innenraum
- 21.: Wanddurchbruch
- 22.: Endbereich
- 23.: Unterer Rand
- 24.: Unterseite
- 25.: Traktionsbatterie
- 26.: Oberseite
- 27.: Bohrung
- 28.: Außenumfangslinie
- 29.: Gewindebohrung
- 30.: Flanschfläche
- 31.: Deckelfläche
- 32.: Endbereiche
- 33.: Spaltfläche
- 34.: Freiraum/Leerraum
- 35.: Unterseite
- 36.: Zwischendeckel
- 37.: Aufnahmeraum
- 38.: Oberseite
- 39.: Lithiumeisenphosphatzellen
- 40.: Körper
- 41.: Leerraum/Freiraum
- 42.: Lastaufnahmemittel
- 43.: Schaltschütz
- 44.: Schaltschütz
- 45.: Pilotkontakt
- 46.: Antriebsmotor
- 47.: Gehäusekörper
- 48.: Aufnahmeraum
- 49.: Batterietrogdeckel
- 50.: Schraubverbindungen
- 51.: Schraubverbindungen
- 53.: Schraubbolzen
- 54.: Zwischenraum
- 55.: Kabelverschraubung

## Patentansprüche

1. Batteriestromversorgung (1) für ein in einem explosionsgefährdeten Bereich eingesetztes Flurförderfahrzeug (8), mit einem, einen Gehäusekörper (47) und einen Deckel (4) aufweisenden Gehäuse (2), wobei der Gehäusekörper (47) einen Aufnahmeraum (48) zur Aufnahme eines Batterietrogs (3) besitzt, der einen Innenraum (20) mit einer darin angeordneten Traktionsbatterie (25) aufweist, und der Deckel (4) mit Sicherungsmitteln (53) lösbar am Gehäusekörper (47) festlegbar ist und der Batterietrog (3) einen Batterietrogdeckel (49) und einen Boden (16) mit sich vom Boden (16) weg erstreckenden Wänden (17, 18) besitzt, **dadurch gekennzeichnet, dass** mindestens eine Wand (17, 18) in einem dem Boden (16) benachbarten Bereich eine die Wand (17, 18) bis zum Innenraum (20) durchsetzende Ausnehmung (19) aufweist.

2. Batteriestromversorgung (1) nach Anspruch 1, **dadurch gekennzeichnet, dass** der Boden (16) in einer Draufsichtansicht eine rechteckförmige Konfiguration mit Längsseiten und Querseiten aufweist und die Längsseiten eine Längserstreckung aufweisen, die größer ist als die Längserstreckung der Querseiten und sich die Wände (17, 18) zur Ausbildung des Innenraums (20) im Winkel zum Boden (16) von diesem weg erstrecken und die an den Querseiten angeordneten Wände (17) eine im Bereich der Mitte der Längserstreckung der jeweiligen Wand (17) angeordnete durchsetzende Ausnehmung (19) und die an den Längsseiten angeordneten Wände (18) jeweils zwei durchsetzende Ausnehmungen (19) aufweisen, die an einander gegenüberliegenden Endbereichen (22) der Längsseiten der jeweiligen Wand (18) angeordnet sind.

3. Batteriestromversorgung (1) nach Anspruch 1 oder 2, **dadurch gekennzeichnet, dass** die Ausnehmungen (19) als die jeweilige Wand (17, 18) durchsetzende rechteckförmige Wanddurchbrüche (21) ausgebildet sind.

4. Batteriestromversorgung (1) nach einem der vorstehenden Ansprüche, **dadurch gekennzeichnet, dass** die Ausnehmungen (19) am bodenseitigen Endbereich des Innenraums (20) des Batterietrogs (3) ausgebildet sind und eine Gesamtfläche aufweisen, welche einen im Rahmen einer Baumusterprüfung des Gehäuses (2) durch eine im Gehäuse (2) ausgelöste Testexplosion entstehenden Testexplosionsinnendruck auf einen im Batterietrog (3) herrschenden Zulassungsinnendruck verringert, der kleiner ist als ein den Batterietrog (3) und/oder das Gehäuse (2) öffnender Explosionsinnendruck.

5. Batteriestromversorgung (1) nach einem der vorstehenden Ansprüche, **dadurch gekennzeichnet, dass** die Ausnehmungen (19) am bodenseitigen Endbereich des Innenraums (20) des Batterietrogs (3) oberhalb des Bodens (16) in einem Bereich angeordnet sind, an dem eine Überlagerungswelle auftritt, die durch eine im Gehäuse (2) ausgelöste Explosion hervorgerufen ist.

6. Batteriestromversorgung (1) nach einem der vorstehenden Ansprüche, **dadurch gekennzeichnet, dass** zwischen einer dem Gehäusekörper (47) zugewandten Deckelfläche (31) und einer dem Deckel (4) zugewandten Oberfläche des Gehäusekörpers (47) eine fein bearbeitete Spaltfläche (33) mit vorbestimmter Spaltflächenbreite und einem Mittenrauwert kleiner gleich 6.3 µm ausgebildet ist.

7. Batteriestromversorgung (1) nach einem der vorstehenden Ansprüche, **dadurch gekennzeichnet, dass** der Deckel (4) am Gehäusekörper (47) mittels einer Mehrzahl von Schraubverbindungen (53) lösbar festgelegt ist und die Schraubverbindungen (53) entlang einer Außenumfangslinie (28) des Deckels (4) verlaufend vorgesehen sind und in einem vorbestimmten Abstand zueinander angeordnet sind.

8. Batteriestromversorgung (1) nach einem der vorstehenden Ansprüche, **dadurch gekennzeichnet, dass** zwischen dem Aufnahmeraum (48) und einer Unterseite (35) des Batterietrogdeckels (49) ein am Batterietrog (3) lösbar festlegbarer Zwischendeckel (36) vorgesehen ist, der einen Aufnahmeraum (37) zwischen einer Oberseite (38) des Zwischendeckels (36) und der Unterseite (35) des Batterietrogdeckels (49) ausbildet und zur Aufnahme einer elektronischen Schaltung (14) ausgebildet ist.

9. Batteriestromversorgung (1) nach einem der vorstehenden Ansprüche, **gekennzeichnet durch** Kabelverschraubungen (5, 6, 7, 10, 11) zur Bereitstellung einer elektrischen Ladeverbindung zum Laden der Traktionsbatterie (25) und einer elektrischen Leistungsverbindung zur Bereitstellung elektrischer Energie für das Flurförderfahrzeug (8).

10. Batteriestromversorgung (1) nach einem der vorstehenden Ansprüche, **gekennzeichnet durch** einen mit einem Schaltschütz (43) schaltbaren Laststromkreis für den Betrieb des Flurförderfahrzeugs (8) und einen mit einem Schaltschütz (44) schaltbaren Ladestromkreis für das Laden der Traktionsbatterie (25).

11. Batteriestromversorgung (1) nach Anspruch 10, **gekennzeichnet durch** eine extern schaltbare und mit den Schaltschützen (43, 44) gekoppelte Anschlußeinrichtung (45) derart, dass die externe Schaltung wechselweise den Laststromkreis spannungsfrei schaltet und den Ladestromkreis durchschaltet derart, dass der Laststromkreis bei geschaltetem Ladestromkreis spannungsfrei ist.

12. Batteriestromversorgung (1) nach einem der Ansprüche 8 bis 11, **gekennzeichnet durch** eine Schnittstelleneinrichtung (12) in der Form insbesondere einer CAN Bus Schnittstelleneinrichtung zum Austausch von Daten und/oder Signalen zwischen der mit der Traktionsbatterie (25) funktional gekoppelten elektronischen Schaltung (14) und einer externen Ladeeinrichtung für das Laden der Traktionsbatterie (25).

13. Batteriestromversorgung (1) nach einem der vorstehenden Ansprüche, **dadurch gekennzeichnet, dass** die Traktionsbatterie (25) von einer Mehrzahl von Lithiumeisenphosphatzellen (39) gebildet ist, die weitgehend parallel zum Boden (16) des Batterietrogs (3) angeordnet sind und zwischen den Zellen (39) Leerräume (41) zum Durchtritt von gasförmigem Fluid aus dem Innenraum (20) zu der Ausnehmung (19) vorgesehen sind.

14. Flurförderfahrzeug (8) mit mindestens einer elektrisch betätigten Antriebseinrichtung zum Fahren des Flurförderfahrzeugs (8) und/oder Bewegen einer Last, **gekennzeichnet durch** eine Batteriestromversorgung (1) nach einem der vorstehenden Ansprüche.

## Claims

1. Battery power supply (1) for an industrial truck (8) used in an explosive region, having a housing (2) comprising a housing body (47) and a cover (4), wherein the housing body (47) features a receiving space (48) for receiving a battery tray (3), which has an interior space (20) with a traction battery (25) arranged therein, and the cover (4) is fixable detachably on the housing body (47) with securing means (53) and the battery tray (3) features a battery tray cover (49) and a floor (16) having walls (17, 18) extending away from the floor (16), **characterised in that** at least one wall (17, 18) has a recess (19) extending through the wall (17, 18) to the interior space (20) in a region adjacent to the floor (16).

2. Battery power supply (1) according to claim 1, **characterised in that** the floor (16) has a rectangular configuration with longitudinal sides and transverse sides in a top view perspective and the longitudinal sides have a longitudinal extension which is larger than the longitudinal extension of the transverse sides and the walls (17, 18) extend away from the floor (16) at an angle to this to form the interior space (20), and the walls (17) arranged on the transverse sides have a through-recess (19) arranged in the region of the centre of the longitudinal extension of the respective wall (17), and the walls (18) arranged on the longitudinal sides each have two through-recesses (19) which are arranged at opposite end regions (22) of the longitudinal sides of the respective wall (18).

3. Battery power supply (1) according to claim 1 or 2, **characterised in that** the recesses (19) are formed as rectangular wall openings (21) passing through the respective wall (17, 18).

4. Battery power supply (1) according to one of the preceding claims, **characterised in that** the recesses (19) are formed on the floor-side end region of the interior space (20) of the battery tray (3) and a have a total surface area which reduces an internal test explosion pressure produced during a type test of the housing (2) by a test explosion triggered in the housing (2) to an internal admission pressure prevailing in the battery tray (3) which is lower than an internal explosion pressure opening the battery tray (3) and/or the housing (2).

5. Battery power supply (1) according to one of the preceding claims, **characterised in that** the recesses (19) are arranged on the floor-side end region of the interior space (20) of the battery tray (3) above the floor (16) in a region, at which a displacement wave occurs which is caused by an explosion triggered in the housing (2).

6. Battery power supply (1) according to one of the preceding claims, **characterised in that**, between a cover surface (31) facing the housing body (47) and a surface of the housing body (47) facing the cover (4), a finely machined gap surface (33) with a predetermined gap surface width and a centre roughness value of less than or equal to 6.3 µm is formed.

7. Battery power supply (1) according to one of the preceding claims, **characterised in that** the cover (4) is fixed to the housing body (47) in removable manner by means of a plurality of screw connections (53) and the screw connections (53) are provided running along an outer peripheral line (28) of the cover (4) and are arranged at a predetermined distance from one another.

8. Battery power supply (1) according to one of the preceding claims, **characterised in that**, between the receiving space (48) and a base (35) of the battery tray cover (49), an intermediate cover (36) is provided fixed on the battery tray (3) in a removable manner, which forms a receiving space (37) between a top side (38) of the intermediate cover (36) and the base (35) of the battery tray cover (49) and is formed for receiving an electronic switch (14).

9. Battery power supply (1) according to one of the preceding claims, **characterised by** cable glands (5, 6, 7, 10, 11) for providing an electric charging connection for charging the traction battery (25) and an electric power connection for providing electric energy for the industrial truck (8).

10. Battery power supply (1) according to one of the preceding claims, **characterised by** a load current circuit which can be switched with a contactor (43) for the operation of the industrial truck (8) and a load current circuit which can be switched with a contactor (44) for charging the traction battery (25).

11. Battery power supply (1) according to claim 10, **characterised by** an externally switchable connection device (45) coupled to the switching contactors (43, 44) in such a way that the external circuit alternately switches the load current circuit voltage-free and switches the charging circuit through in such a way that the load current circuit is voltage-free when the charging circuit is switched.

12. Battery power supply (1) according to one of claims 8 to 11, **characterised by** an interface device (12) in the form, in particular, of a CAN bus interface device for exchanging data and/or signals between the electronic switch (14), functionally coupled with the traction battery (25), and an external charging device for charging the traction battery (25).

13. Battery power supply (1) according to one of the preceding claims, **characterised in that** the traction battery (25) is formed from a plurality of lithium iron phosphate cells (39) which are arranged mostly parallel to the floor (16) of the battery tray (3), and empty spaces are provided between the cells (39) (41) for passage of gaseous fluid from the interior space (20) to the recess (19).

14. Industrial truck (8) having at least one electrically actuated drive device for driving the industrial truck (8) and/or moving a load, **characterised by** a battery power supply (1) according to one of the preceding claims.

## Revendications

1. Dispositif d'alimentation par batterie (1) pour chariot de manutention (8) employé en zone explosive, comportant : un boîtier (2) présentant un corps de boîtier (47) et un couvercle (4), ledit corps de boîtier (47) possédant un espace de réception (48) destiné à recevoir un bac de batterie (3) présentant un espace intérieur (20) doté d'une batterie de traction (25) disposée dans celui-ci, et ledit couvercle (4) pouvant être fixé de manière amovible au corps de boîtier (47) par des moyens de fixation (53), et ledit bac de batterie (3) possédant un couvercle de bac de batterie (49) et un fond (16) doté de parois (17, 18) partant dudit fond (16) ; **caractérisé en ce qu'**au moins une paroi (17, 18) présente, dans une zone adjacente audit fond (16), un évidement (19) qui traverse ladite paroi (17, 18) pour parvenir audit espace intérieur (20).

2. Dispositif d'alimentation par batterie (1) selon la revendication 1, **caractérisé en ce que** le fond (16), vu en plan, a une configuration rectangulaire présentant des côtés longs et des côtés transversaux, lesquels côtés longs ont une étendue longitudinale qui est supérieure à l'étendue longitudinale des côtés transversaux, et les parois (17, 18) formant l'espace intérieur (20) partent dudit fond (16) en formant un angle avec celui-ci et les parois (17) disposées sur les côtés transversaux présentent un évidement traversant (19) situé dans la zone centrale de l'étendue longitudinale de la paroi respective (17), et les parois (18) situées sur les côtés longs présentent chacune deux évidements traversants (19) qui sont situés dans des zones terminales (22) opposées des côtés longs de la paroi (18) respective.

3. Dispositif d'alimentation par batterie (1) selon la revendication 1 ou 2, **caractérisé en ce que** les évidements (19) sont conçus sous la forme de passages rectangulaires (21) traversant la paroi (17, 18) respective.

4. Dispositif d'alimentation par batterie (1) selon l'une des revendications précédentes, **caractérisé en ce que** les évidements (19) sont formés dans la région terminale côté fond de l'espace l'intérieur (20) du bac de batterie (3) et présentent une surface totale qui permet de réduire une pression intérieure, produite par une explosion d'essai déclenchée dans le cadre d'un examen de type du boîtier (2), à une pression interne régnante admissible pour le bac de batterie (3) qui est inférieure à une pression interne d'explosion qui amènerait le bac de batterie (3) et/ou le boîtier (2) à s'ouvrir.

5. Dispositif d'alimentation par batterie (1) selon l'une des revendications précédentes, **caractérisé en ce que** les évidements (19) ménagés dans la zone terminale côté fond de l'espace intérieur (20) du bac de batterie (3) sont situés au-dessus du fond (16) dans une zone où se produit une onde de superposition provoquée par une explosion déclenchée dans le boîtier (2).

6. Dispositif d'alimentation par batterie (1) selon l'une des revendications précédentes, **caractérisé en ce qu'**il est formé une surface interstitielle (33) finement usinée entre une surface (31) du couvercle qui est tournée vers le corps de boîtier (47) et une surface du corps de boîtier (47) qui est tournée vers le couvercle (4), la largeur de ladite surface interstitielle étant prédéterminée et sa valeur de rugosité moyenne étant inférieure ou égale à 6,3 µm.

7. Dispositif d'alimentation par batterie (1) selon l'une des revendications précédentes, **caractérisé en ce que** le couvercle (4) est fixé de manière amovible au corps de boîtier (47) au moyen d'une pluralité de raccords vissés (53) et les raccords vissés (53) sont prévus le long d'une ligne périphérique extérieure (28) du couvercle (4) selon des écarts prédéterminés les uns par rapport aux autres.

8. Dispositif d'alimentation par batterie (1) selon l'une des revendications précédentes, **caractérisé en ce qu'**un couvercle intermédiaire (36) pouvant être fixé de manière amovible au bac de batterie (3) est prévu entre l'espace de réception (48) et une face inférieure (35) du couvercle de bac de batterie (49), lequel couvercle intermédiaire forme un espace de réception (37) entre un côté supérieur (38) du couvercle intermédiaire (36) et la face inférieure (35) du couvercle de bac de batterie (49) et est formé pour accueillir un circuit électronique (14).

9. Dispositif d'alimentation par batterie (1) selon l'une des revendications précédentes, **caractérisé par** des presse-étoupes (5, 6, 7, 10, 11) permettant d'assurer une connexion de recharge électrique pour recharger la batterie de traction (25) et une connexion d'alimentation électrique pour fournir de l'énergie électrique au chariot de manutention (8).

10. Dispositif d'alimentation par batterie (1) selon l'une des revendications précédentes, **caractérisé par** un circuit de charge commutable avec un contacteur (43) et permettant de faire fonctionner le chariot de manutention (8) et par un circuit de charge commutable avec un contacteur (44) pour recharger la batterie de traction (25).

11. Dispositif d'alimentation par batterie (1) selon la revendication 10, **caractérisé par** un dispositif de connexion (45) commutable extérieurement et couplé aux contacteurs (43, 44) de telle façon que la commutation externe permet, de manière synchronisée, la mise hors tension du circuit de charge et la connexion du circuit de recharge de telle façon que le circuit de charge est hors tension lorsque le circuit de recharge est activé.

12. Dispositif d'alimentation par batterie (1) selon l'une des revendications 8 à 11, **caractérisé par** un dispositif d'interface (12) sous la forme notamment d'un dispositif d'interface à bus CAN permettant l'échange de données et/ou de signaux entre le circuit électronique (14) couplé de manière fonctionnelle à la batterie de traction (25) et un dispositif de recharge externe destiné à recharger la batterie de traction (25).

13. Dispositif d'alimentation par batterie (1) selon l'une des revendications précédentes, **caractérisé en ce que** la batterie de traction (25) est formée par une pluralité de cellules lithium-fer-phosphate (39) qui sont disposées sensiblement parallèlement au fond (16) du bac de batterie (3), des espaces vides (41) étant prévus entre les cellules (39) pour la circulation d'un fluide gazeux entre l'espace intérieur (20) et l'évidement (19).

14. Chariot de manutention (8) doté d'au moins un dispositif de propulsion électrique permettant la conduite du chariot de manutention (8) et/ou le déplacement d'une charge, **caractérisé par** un dispositif d'alimentation par batterie (1) selon l'une des revendications précédentes.
